# FASCICULE DE BREVET EUROPEEN

(11) **EP 3 574 187 B1**
(45) Date de publication et mention de la délivrance du brevet: **09.12.2020**
(21) Numéro de dépôt: 18706784.8
(22) Date de dépôt: 26.01.2018
(51) Int. Cl.: F01D 5/00

(54) **PROCEDE POUR LE DECOLLEMENT D'UN ELEMENT METALLIQUE COLLE A UN ELEMENT EN MATERIAU COMPOSITE**
VERFAHREN ZUM ENTFERNEN EINES MIT EINEM ELEMENT AUS VERBUNDWERKSTOFF VERBUNDENEN METALLELEMENTS
METHOD FOR REMOVING A METAL ELEMENT BONDED TO AN ELEMENT MADE OF COMPOSITE MATERIAL

(30) Priorité: 30.01.2017 FR 1750731
(43) Date de publication de la demande: 04.12.2019
(73) Titulaire: Safran Aircraft Engines, 75015 Paris (FR)
(72) Inventeur: CHARLAS, Mathieu, Julien, 77550 Moissy-Cramayel (FR)
(74) Mandataire: Brevalex
(86) Numéro de dépôt international: PCT/FR2018/050177
(87) Numéro de publication internationale: WO 2018/138445

(56) Documents cités:
- EP-A1- 0 854 208
- FR-A1- 2 970 197
- FR-A1- 3 025 735

## Description

### DOMAINE TECHNIQUE

L'invention se rapporte à une pale de soufflante de moteur d'avion tel qu'un turboréacteur à double flux, comportant un corps de pale en matériau composite auquel est collé un bord d'attaque métallique.

### ÉTAT DE LA TECHNIQUE ANTÉRIEURE

Du fait de sa position frontale en entrée de moteur, une soufflante est exposée aux chocs résultant de l'admission de corps étrangers solides dans le moteur, tels que de la glace ou des oiseaux.

Comme la tenue d'un matériau composite tel que le carbone époxy est inadaptée à de tels chocs, une pale de soufflante dite en matériau composite, comporte typiquement un corps de pale en matériau composite auquel est collé un bord d'attaque en matériau métallique tel qu'un alliage à base de titane.

La meilleure tenue aux chocs des alliages au titane permet ainsi à une telle pale de supporter les impacts de corps étrangers, qui interviennent principalement sur son bord d'attaque, tout en étant majoritairement formée de matériau composite pour présenter une tenue mécanique globale et une masse adaptées.

En pratique, le bord d'attaque en titane est fixé au bord d'attaque du corps de pale en matériau composite par collage. Et il arrive que l'on doive désassembler le bord d'attaque et le corps de pale après collage.

Cette situation peut survenir en cours de fabrication lorsque le collage ne s'est pas déroulé correctement, et doit donc être refait. Cela peut également survenir en cours de vie de la pale lorsque le bord d'attaque métallique détérioré doit être changé, alors que le corps de pale en matériau composite est dans un état d'usure satisfaisant.

Dans ce domaine, les documents de brevets FR2992243B1 et FR3025735A1 enseignent respectivement un procédé de décollement par choc laser et par compression pour favoriser la désolidarisation de ce bord d'attaque du corps de pale qui le porte.

Il a également été envisagé de procéder à froid en recherchant une zone de fragilité du collage, par différence de température pour créer une différence de température entre le corps et le bord collé, par dissolution chimique du bord d'attaque ou bien du composite formant le corps de pale, ou encore par abrasion du composite ou bien du bord d'attaque.

Attendu que ces solutions ne se sont jusqu'à ce jour pas avéré satisfaisantes, celles-ci ne permettant pas d'obtenir d'un côté le bord d'attaque et de l'autre la pièce en composite intacte, le but de l'invention est d'apporter une solution alternative permettant de désassembler une pale comprenant un corps en matériau composite avec un bord d'attaque métallique collé à ce corps.

### EXPOSÉ DE L'INVENTION

A cet effet, l'invention a pour objet un procédé de décollement d'au moins une partie d'une pièce métallique collée à une pièce en matériau composite de type carbone-époxy, comprenant une étape de dégradation de l'interface de collage entre la pièce métallique et la pièce en matériau composite, dans lequel la pièce métallique et la pièce en matériau composite sont électriquement connectées à un générateur de tension électrique continue pour être soumises à une différence de potentiel électrique afin de générer des décharges partielles dans l'interface de collage pour la dégrader.

Avec cette solution, la pièce métallique peut être décollée de la pièce composite à laquelle elle est collée sans nécessité de devoir la déformer ou la dégrader par des efforts mécaniques ou thermique ni par une attaque chimique.

L'invention concerne également un procédé ainsi défini, dans lequel la pièce en matériau composite est un corps de pale et dans lequel la pièce métallique est un bord d'attaque collé à ce corps de pale, et dans lequel le corps de pale comporte un pied par l'intermédiaire duquel ce corps de pale est électriquement relié au générateur de tension électrique.

L'invention concerne également un procédé ainsi défini, comprenant le montage d'une garde en matériau électriquement isolant entourant le pied de pale pour former un écran électriquement isolant s'étendant entre le bord d'attaque et le pied de pale afin d'éviter l'apparition d'un arc électrique entre le pied de pale et le bord d'attaque métallique.

L'invention concerne également un procédé ainsi défini, dans lequel la garde est une pièce en élastomère électriquement isolant comprenant une ouverture centrale agencée pour recevoir le pied de pale en l'enserrant.

L'invention concerne également un procédé ainsi défini, dans lequel la garde comporte deux parties complémentaires se réunissant pour entourer le pied de pale.

L'invention concerne également un procédé ainsi défini, comprenant une opération préalable de métallisation d'une face du pied de pale pour assurer une mise sous tension de la majorité des fibres du matériau composite constitutif du corps de pale.

L'invention concerne également un procédé ainsi défini, dans lequel la métallisation est assurée par dépôt par plasma froid d'une couche métallique de cuivre, d'aluminium, d'argent, ou d'or.

L'invention concerne également un procédé ainsi défini, dans lequel la métallisation est assurée par application d'un ruban adhésif de cuivre ou d'aluminium au pied de pale pour le relier au générateur de tension.

L'invention concerne également un procédé ainsi défini, dans lequel l'étape de dégradation de l'interface de collage est mise en œuvre au sein d'un fluide électriquement isolant tel que de l'azote pressurisé.

### BRÈVE DESCRIPTION DES DESSINS

La figure 1 est une vue latérale d'une pale comprenant un corps en matériau composite auquel est collé un bord d'attaque métallique ;
La figure 2 est une vue latérale d'une pale comprenant un corps en matériau composite auquel est collé un bord d'attaque métallique avec des moyens de connexion électrique du pied et du bord d'attaque ;
La figure 3 est une vue latérale d'une pale comprenant un corps en matériau composite auquel est collé un bord d'attaque métallique avec des moyens de connexion électrique du pied et du bord d'attaque ainsi qu'une garde entourant le pied ;
La figure 4 est une vue latérale montrant le décollement d'un bord d'attaque métallique d'un corps de pale en matériau composite.

### EXPOSÉ DÉTAILLÉ DE MODES DE RÉALISATION PARTICULIERS

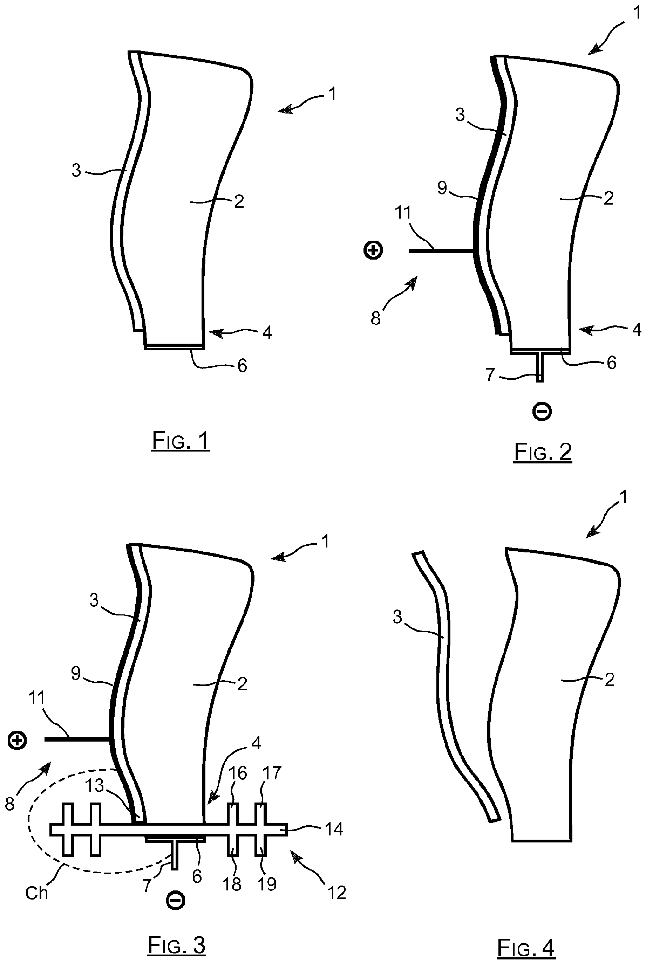

Sur la figure 1, une pale de soufflante 1 de turboréacteur, dite en matériau composite, comprend un corps 2 en matériau composite proprement dit, tel qu'un composite de type carbone-époxy, auquel un bord d'attaque 3 métallique est fixé par collage, ce bord d'attaque étant ici en alliage à base de titane.

Le corps 2 comporte un pied 4 ou base par l'intermédiaire duquel il est destiné à être fixé à un élément de rotor du moteur, et au niveau duquel les fibres du matériau composite du corps de pale aboutissent en ayant leurs extrémités affleurantes.

L'idée à la base de l'invention est d'établir une différence de potentiel électrique continue entre le bord d'attaque métallique et le corps de pale en matériau composite de manière à provoquer des décharges partielles entre ces deux éléments, c'est-à-dire au niveau de la colle formant leur interface, pour détériorer cette colle.

Pour établir cette différence de potentiel, le bord d'attaque métallique 2 et le pied 4 de pale sont reliés chacun à une borne d'un générateur de tension continue non représenté.

A cet effet, le pied 4 de pale 1 est traité par métallisation pour déposer sur sa face où débouchent les fibres de carbone, une couche métallique 6 permettant d'assurer une mise sous tension de la grande majorité des fibres de carbone constituant le corps de pale.

Cette métallisation peut être obtenue par application d'un ruban adhésif d'aluminium ou de cuivre disponible dans le commerce, le film de colle nécessaire n'apportant qu'une résistance électrique négligeable. Cette métallisation peut également être obtenue par formation d'un dépôt métallique de cuivre, d'aluminium ou d'or apporté sous forme de métallisation déposée par plasma froid.

Comme visible sur la figure 2, une électrode 7 est ensuite rapportée sur la face métallisée 6 en étant électriquement connectée à celle-ci. La connexion de cette électrode 7 à une borne du générateur de tension permet ainsi de mettre la très grande majorité des fibres de carbone du corps de pale 2 au même potentiel, en la connectant à la borne négative du générateur de tension continue.

En ce qui concerne le bord d'attaque métallique 3, une électrode repérée par 8 sur la figure 2 est collée ou bien brasée sur ce bord d'attaque. Cette électrode peut comporter une portion 9 qui s'étend tout le long de ce bord d'attaque en y étant collée ou brasée, et qui est prolongée par une extrémité 11 d'orientation perpendiculaire au bord d'attaque, et destinée à être reliée à la borne positive du générateur de tension. Alternativement, une pince crocodile peut directement être appliquée sur le bord d'attaque pour l'enserrer et être reliée à la borne positive du générateur de tension continue.

Complémentairement, une garde en matériau électriquement isolant, repérée par 12 sur la figure 3 est rapportée sur le pied de pale de manière à l'entourer. Cette garde 12 est agencée pour constituer un écran isolant visant à éviter la formation d'un arc électrique entre la face métallisée 6 du pied de pale 4, et l'extrémité 13 du bord d'attaque qui est la plus proche de ce pied.

Cette garde 12 qui est avantageusement fabriquée dans un matériau souple tel qu'un élastomère de silicone ou de polyuréthane constitue une paroi agencée pour augmenter la distance devant être parcourue par un arc électrique depuis le pied de pale 4 jusqu'à l'extrémité 13 du bord d'attaque 3. Cette garde peut aussi être fabriquée en matériau epoxyde cycloaliphatique, ou mica/silicone ou mica/epoxyde ou tout autre matériau approprié.

Dans l'exemple de la figure 3, cette garde 12 comporte une paroi de base 14 à contour généralement ovale comprenant une ouverture centrale prévue pour être traversée par le pied de pale 4. Lorsque cette garde est en place comme dans la figure 3, elle constitue une cloison électriquement isolante qui est interposée entre la face métallisée 6 et l'extrémité 13 du bord d'attaque métallique 3.

Le choix d'un matériau souple pour cette garde permet d'appliquer une pression autour du pied de la pale pour l'enserrer de manière à offrir une isolation électrique entre le pied de la pale et le bord d'attaque.

Grâce à cette garde, le chemin le plus court pour que se forme un arc entre la face métallisée 6 et le bord d'attaque 3, qui est représenté en pointillés sur la figure 3 en y étant repéré par Ch, contourne nécessairement la paroi 14. Ce chemin Ch est ainsi significativement plus long que la distance séparant la paroi métallisée 6 de l'extrémité métallique 13 du bord d'attaque.

Comme visible sur la figure 3, la paroi de base 14 de la garde 12 porte à sa face supérieure deux parois circonférentielles concentriques repérées par 16 et 17 qui entourent l'une et l'autre le pied 4 de la pale. De manière analogue, la face inférieure de la garde 12 porte deux autres parois du même type, repérées par 18 et 19, également concentriques et qui entourent la face métallisée 6 ainsi que l'électrode 7 dépassant de cette face métallisée 6.

La paroi 16 a une forme de ruban fermé entourant le pied 4 et s'étendant perpendiculairement à la face supérieure de la paroi de base 14 qui la porte. La paroi 17 a la même forme que la paroi 16 qu'elle entoure. Les parois 18 et 19 sont respectivement les symétriques des parois 18 et 19 par rapport au plan de la paroi de base 14 qui est généralement plane, elles permettent d'accroître encore le chemin séparant le pied de pale et le bord d'attaque.

Cette garde 12 peut être formée de deux pièces s'emboîtant complémentairement l'une avec l'autre autour du pied 4 de manière à l'enserrer en constituant un écran électriquement isolant autour de ce pied.

Lorsque la pale 1 à traiter a été préparée, c'est-à-dire lorsque la face inférieure 6 de son pied 4 a été métallisée et que l'électrode 7 y a été fixée, et qu'une électrode 8 a également été fixée au bord d'attaque 3 pour y être électriquement connectée, la garde 12 est montée autour du pied 4 avant de procéder au traitement proprement dit.

L'électrode 8 du bord d'attaque 3 est alors reliée à une borne positive du générateur de tension électrique continue, et l'électrode 7 du corps de pale est reliée à la borne négative du générateur de tension, par exemple au moyen de pinces de type crocodile.

Le générateur est alors manipulé pour augmenter la tension électrique appliquée jusqu'à une valeur de tension provoquant des décharges partielles au niveau de l'interface entre le bord d'attaque et le corps de pale, c'est-à-dire dans la couche de colle fixant ces deux éléments l'un à l'autre, qui est typiquement une colle epoxy structurale.

Concrètement, les décharges partielles sont des micro-décharges électriques s'amorçant dans des irrégularités structurelles d'un élément placé dans un champ électrique d'intensité appropriée. Dans le cadre de l'invention, ces micro-décharges sont provoquées dans la couche de colle liant le bord d'attaque au corps de pale en matériau composite.

En pratique, en détériorant la couche de colle, les micro-décharges permettent de faciliter le détachement du bord d'attaque, ce détachement pouvant être mis en œuvre par traction mécanique après application du traitement, et éventuellement après avoir appliqué additionnellement un autre traitement de dégradation de cette couche de colle.

D'une manière générale, la tension à appliquer est comprise entre 300 volts comme valeur minimale et une valeur maximale correspondant à la valeur maximale admissible par le matériau composite du corps de pale. Cette valeur maximale de tension électrique admissible par le corps de pale peut être déterminée par des essais pour évaluer la tension seuil provoquant un endommagement du matériau du corps de pale.

Ces essais peuvent consister à appliquer différentes tensions à différents corps de pale, pour identifier la valeur à partir de laquelle apparaissent des micro-décharges au sein du matériau composite, et/ou provoquant l'endommagement ou la dégradation du matériau composite. De manière analogue, des essais peuvent être réalisés pour déterminer la tension minimale permettant d'obtenir des micro-décharges dans la couche de colle.

L'identification de ces valeurs seuil permet alors de déterminer la tension à appliquer entre le bord d'attaque et le corps de pale pour provoquer le décollement.

D'une manière générale, l'invention permet de modifier les collages défectueux lors de la fabrication des pales, et de remplacer un bord d'attaque endommagé sans devoir remplacer la totalité de la pale qui le porte, et éventuellement de recycler les bords d'attaques endommagés en titane après les avoir retirés.

Dans l'exemple qui a été décrit, l'invention est appliquée au décollage d'un bord d'attaque métallique collé à un corps de pale en matériau composite, mais l'invention s'applique d'une manière plus générale au décollement d'un élément électriquement conducteur qui est collé à un élément électriquement isolant.

Afin d'améliorer le procédé, l'opération de décollement est mise en œuvre au sein d'un milieu isolant autre que l'air, comme par exemple l'azote gazeux sous une pression par exemple de 30 bars ou encore sous un fluide diélectrique tel qu'une huile minérale ou silicone. Le choix d'un tel milieu pour mettre en œuvre l'opération de décollement permet de limiter voire d'éteindre d'éventuels arcs électriques dans le processus.

## Revendications

1. Procédé de décollement d'au moins une partie d'une pièce métallique (3) collée à une pièce en matériau composite (2) de type carbone-époxy, comprenant une étape de dégradation de l'interface de collage entre la pièce métallique (3) et la pièce en matériau composite (2), dans lequel la pièce métallique (3) et la pièce en matériau composite (2) sont électriquement connectées à un générateur de tension électrique continue pour être soumises à une différence de potentiel électrique afin de générer des décharges partielles dans l'interface de collage pour la dégrader.

2. Procédé selon la revendication 1, dans lequel la pièce en matériau composite est un corps de pale (2) et dans lequel la pièce métallique est un bord d'attaque (3) collé à ce corps de pale, et dans lequel le corps de pale (2) comporte un pied (4) par l'intermédiaire duquel ce corps de pale (2) est électriquement relié au générateur de tension électrique.

3. Procédé selon la revendication 2, comprenant le montage d'une garde (12) en matériau électriquement isolant entourant une portion de pied (4) du corps de pale (2) pour former un écran électriquement isolant s'étendant entre le bord d'attaque (3) et le pied de pale (4) afin d'éviter l'apparition d'un arc électrique entre le pied de pale (4) et le bord d'attaque métallique (3).

4. Procédé selon la revendication 3, dans lequel la garde (12) est une pièce en élastomère électriquement isolant comprenant une ouverture centrale agencée pour recevoir le pied de pale (4) en l'enserrant.

5. Procédé selon la revendication 4, dans lequel la garde (12) comporte deux parties complémentaires se réunissant pour entourer le pied de pale (4).

6. Procédé selon la revendication 2, comprenant une opération préalable de métallisation d'une face du pied de pale (4) pour assurer une mise sous tension de la majorité des fibres du matériau composite constitutif du corps de pale (2).

7. Procédé selon la revendication 6, dans lequel la métallisation est assurée par dépôt par plasma froid d'une couche métallique de cuivre, d'aluminium, d'argent, ou d'or.

8. Procédé selon la revendication 6, dans lequel la métallisation est assurée par application d'un ruban adhésif de cuivre ou d'aluminium au pied de pale (4) pour le relier au générateur de tension.

9. Procédé selon la revendication 1, dans lequel l'étape de dégradation de l'interface de collage est mise en œuvre au sein d'un fluide électriquement isolant tel que de l'azote pressurisé.

## Patentansprüche

1. Verfahren zum Entfernen mindestens eines Teils eines Metallstücks (3), das mit einem Stück aus Verbundwerkstoff (2) vom Kohlenstoffepoxid-Typ verbunden ist, wobei das Verfahren einen Schritt des Abbaus der Verbindungsschnittstelle zwischen dem Metallstück (3) und dem Stück aus Verbundwerkstoff (2) umfasst, wobei das Metallstück (3) und das Stück aus Verbundwerkstoff (2) mit einem elektrischen Gleichspannungsgenerator elektrisch verbunden sind, so dass sie einer elektrischen Potentialdifferenz zur Erzeugung von Teilladungen in der Verbindungsschnittstelle ausgesetzt werden, um diese abzubauen.

2. Verfahren nach Anspruch 1, wobei das Stück aus Verbundwerkstoff ein Schaufelkörper (2) ist und wobei das Metallstück eine mit dem Schaufelkörper verbundene Anströmkante (3) ist, und wobei der Schaufelkörper (2) einen Fuß (4) aufweist, über welchen der Schaufelkörper (2) elektrisch mit dem elektrischen Spannungsgenerator verbunden ist.

3. Verfahren nach Anspruch 2, wobei das Verfahren die Anbringung eines Schutzes (12) aus elektrisch isolierendem Material umfasst, der einen Abschnitt des Fußes (4) des Schaufelkörpers (2) umgibt, um eine elektrisch isolierende Abschirmung auszubilden, welche sich zwischen der Anströmkante (3) und dem Schaufelfuß (4) erstreckt, um die Entstehung eines Lichtbogens zwischen dem Schaufelfuß (4) und der Metallanströmkante (3) zu verhindern.

4. Verfahren nach Anspruch 3, wobei der Schutz (12) aus einem elektrisch isolierenden Elastomer-Teil mit einer mittigen Öffnung besteht, welche zur Aufnahme des Schaufelfußes (4) angeordnet ist, indem sie diesen umschließt.

5. Verfahren nach Anspruch 4, wobei der Schutz (12) zwei komplementäre Teile aufweist, die sich vereinen, so dass sie den Schaufelfuß (4) umgeben.

6. Verfahren nach Anspruch 2, mit einem vorhergehenden Schritt der Metallisierung einer Fläche des Schaufelfußes (4), um sicherzustellen, dass der Hauptteil der Fasern des den Schaufelkörper (2) bildenden Verbundwerkstoffs unter Spannung gesetzt wird.

7. Verfahren nach Anspruch 6, wobei die Metallisierung durch Kaltplasma-Abscheidung einer Metallschicht aus Kupfer, Aluminium, Silber oder Gold sichergestellt wird.

8. Verfahren nach Anspruch 6, wobei die Metallisierung durch Aufbringung eines Klebebandes aus Kupfer oder Aluminium auf den Schaufelfuß (4) sichergestellt wird, um diesen mit dem Spannungsgenerator zu verbinden.

9. Verfahren nach Anspruch 1, wobei der Schritt des Abbaus der Verbindungsschnittstelle in einem elektrisch isolierenden Medium, wie z.B. unter Druck stehendem Stickstoff, durchgeführt wird.

## Claims

1. Method of separating at least one portion of a metallic part (3) glued to a composite material part (2) of the carbon-epoxy type, comprising a step to degrade the glued interface between the metallic part (3) and the composite material part (2), in which the metallic part (3) and the composite material part (2) are electrically connected to a dc electrical voltage generator so that an electrical potential difference can be applied to them to generate partial discharges in the glued interface to degrade the interface.

2. Method according to claim 1, wherein the composite material part (2) is a blade body and in which the metallic part is a leading edge (3) glued to this blade body, and in which the blade body (2) comprises a root (4) through which this blade body (2) is electrically connected to the electrical voltage generator.

3. Method according to claim 2, comprising the assembly of a guard (12) made of electrically insulating material surrounding a portion of the root (4) of the blade body (2) to form an electrically insulating screen extending between the leading edge (3) and the blade root (4) to prevent the appearance of an electric arc between the blade root (4) and the metallic leading edge (3).

4. Method according to claim 3, wherein the guard (12) is an electrically insulating elastomer part comprising a central opening arranged to hold the blade root (4) by squeezing it.

5. Method according to claim 4, wherein the guard (12) comprises two complementary parts joined together to surround the blade root (4).

6. Method according to claim 2, comprising a prior metallisation operation of a face of the blade root (4) to apply voltage to most of the fibres of the composite material from which the blade body (2) is made.

7. Method according to claim 6, wherein metallisation is done by depositing a metallic layer of copper, aluminium, silver or gold by cold plasma.

8. Method according to claim 6, wherein metallisation is achieved by application of a copper or aluminium adhesive tape on the blade root (4) to connect it to the voltage generator.

9. Method according to claim 1, wherein the glued interface degradation step is implemented within an electrically insulating fluid such as pressurised nitrogen.
